# EUROPÄISCHE PATENTANMELDUNG

(11) **EP 3 404 304 A1**
(43) Veröffentlichungstag der Anmeldung: **21.11.2018**
(21) Anmeldenummer: 18157536.6
(22) Anmeldetag: 20.02.2018
(51) Int. Cl.: F16L 33/00, F02M 35/10, F15D 1/02

(54) **VERBINDUNGSANORDNUNG FÜR FLUIDLEITUNGEN**

(30) Priorität: 18.05.2017 DE 102017208444
(71) Anmelder: ContiTech MGW GmbH, 34346 Hannoversch-Münden (DE)
(72) Erfinder: Dönch, Matthias, 34355 Staufenberg-Uschlag (DE); Fassl, Holger, 34379 Calden (DE); Eichstaedt, Robert, 34130 Kassel (DE); Klein, Daniela, 34346 Hann. Münden (DE)
(74) Vertreter: Finger, Karsten

(57) **Zusammenfassung**

Die Erfindung betrifft eine Verbindungsanordnung für Fluidleitungen, aufweisend ein Ladeluftrohr und eine Stützhülse (1). Der Erfindung liegt die Aufgabe zugrunde, die Stützrippen (4, 6, 10, 12, 13, 14, 16) derart auszugestalten, dass die Strömung (7) eines durch die Fluidleitung strömenden Fluids auf vorbestimmte Weise beeinflussbar ist. Diese Aufgabe wird dadurch gelöst, dass die Stützhülse (1) aus einem Kunststoffmaterial hergestellt ist und im Inneren (3) radial angeordnete Stützrippen (4, 6, 10, 12, 13, 14, 16) aufweist. Die Stützrippen (4, 6, 10, 12, 13, 14, 16) können in ihrer axialen Ausdehnung gegenüber der Strömungsrichtung (7) eines strömenden Fluids einen Anströmwinkel (5, 5a- 5e) aufweisen, der zwischen 135° und 45° liegt. Die Stützrippen (4, 6, 10, 12, 13, 14, 16) können auch einen sich ändernden Querschnitt (15) aufweisen, gekrümmt oder in Umfangsrichtung der Stützhülse (1) ungleichmäßig verteilt sein.

## Beschreibung

Die Erfindung betrifft eine Verbindungsanordnung für Fluidleitungen, aufweisend ein Ladeluftrohr und eine Stützhülse.

Ladeluftrohre werden aufgrund der einfachen Herstellbarkeit und des geringen Gewichts heute oft als Blasformteil ausgeführt. Dabei sind auch geringe Wandstärken erreichbar.

Problematisch sind diese geringen Wandstärken im Bereich der Anschlüsse, da die Festigkeit der Rohrwand meist nicht ausreicht, um weitere Fluidleitungen an das Rohr anzuschließen. Dies geschieht meist durch das Aufschieben eines Schlauches auf das Endstück des Ladeluftrohres und anschließender Verklemmung mit Spannhülsen oder Schellen. Ohne Verstärkung des Endes des Ladeluftrohres würde dieses bei der Verklemmung zusammengedrückt.

Die Endstücke sind daher meist mit einer metallischen Stützhülse verstärkt. Dies verursacht teilweise erheblichen Aufwand, da das Endstück des Ladeluftrohres auf ein definiertes Maß aufgespindelt werden muss, um die metallene Hülse in das Innere des Rohres einpressen zu können. Da das thermische Verhalten der Kunststoffe des Ladeluftrohres und des Metalles der Stützhülse unterschiedlich sind, muss die Hülse auch gegen ein Herausfallen aus dem Rohrende gesichert sein. Dazu kann beispielsweise der Kunststoff am Rohrende nochmals aufgeschmolzen und nach innen gedrückt werden. So entsteht eine Herausfallsperre.

Derartige Stützhülsen sind meist relativ schwer und wegen des unterschiedlichen Temperaturverhaltens nicht optimal einsetzbar.

Der Erfindung liegt die Aufgabe zugrunde, eine einfache und kostengünstige Verbindungsanordnung für Fluidleitungen zu schaffen, die eine sichere Montage fluidführender Bauteile ermöglicht.

Diese Aufgabe wird dadurch gelöst, dass die Stützhülse aus einem Kunststoffmaterial hergestellt ist und im Inneren radial angeordnete Stützrippen aufweist.

Kunststoff-Stützhülsen haben den Vorteil, dass sie im Spritzgussverfahren leicht und kostengünstig herstellbar sind. Gegenüber metallischen Stützhülsen sind sie deutlich leichter. Das thermische Verhalten des Kunststoffmaterials der Stützhülsen ist mit dem der Fluidleitungen gut abstimmbar. Die Stützrippen sorgen für eine besonders hohe Steifigkeit der Stützhülse, sodass die Wandstärke geringer ausfallen kann.

In einer Weiterbildung der Erfindung weisen die Stützrippen in ihrer axialen Ausdehnung gegenüber der Strömungsrichtung eines strömenden Fluids einen Anströmwinkel auf, der zwischen 135° und 45° liegt.

In einer Weiterbildung der Erfindung weisen die Stützrippen einen Anströmwinkel auf, der über die radiale Ausdehnung der Stützrippen verschiedene Werte aufweist.

Mittels dieses Anströmwinkel ist es möglich, die Verwirbelung des strömenden Fluids beim Auftreffen auf die Rippen gezielt zu beeinflussen. So sind beispielsweise unerwünschte Verwirbelungen verringerbar.

In einer Weiterbildung der Erfindung weisen die Stützrippen einen in Strömungsrichtung sich ändernden Querschnitt auf.

Durch diese Ausgestaltung ist es möglich, ähnlich wie bei einer Flugzeugtragfläche, im Fluidstrom Geschwindigkeitsgradienten zu erzeugen.

In einer Weiterbildung der Erfindung sind die Stützrippen in Strömungsrichtung gekrümmt.

Diese Ausführungsform ähnelt einem Propeller. Damit sind in dem strömenden Fluid Rotation erzeugbar oder beeinflussbar.

In einer Weiterbildung der Erfindung sind die Stützrippen in Umfangsrichtung ungleichmäßig verteilt.

Mit einer derartigen Anordnung lassen sich auch ungleichmäßig strömende Medien gut beeinflussen.

Anhand der Zeichnung wird ein Beispiel der Erfindung näher erläutert es zeigt
Fig. 1 eine Stützhülse mit gleichmäßig verteilten Stützrippen und einem Anströmwinkel von 90°,
Fig. 2a-2c prinzipielle Schnittdarstellungen von Stützhülsen mit unterschiedlichen Anströmwinkel der Stützrippen,
Fig. 3 eine prinzipielle Darstellung einer Stützhülse mit propellerförmig angeordneten Stützrippen,
Fig. 4 eine Stützhülse mit Stützrippen mit nicht konstantem Querschnitt und
Fig. 5 eine prinzipielle Querschnittsdarstellung einer Stützhülse mit ungleichmäßig verteilten Stützrippen.

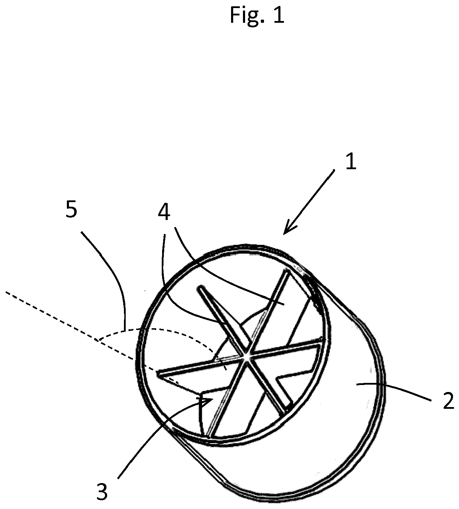

In Fig. 1 ist eine erfindungsgemäße Stützhülse 1 gezeigt. Die Stützhülse 1 ist aus thermoplastischem Kunststoff im Spritzgussverfahren hergestellt.

Die Stützhülse 1 weist einen zylindrischen Grundkörper 2 auf. In ihrer inneren Durchlassöffnung 3 weist die Stützhülse 1 radial nach außen weisende, quasi sternförmig angeordnete Stützrippen 4 auf. Die Stützrippen 4 versteifen den Grundkörper 2 und weisen einen Anströmwinkel 5 von 90° auf.

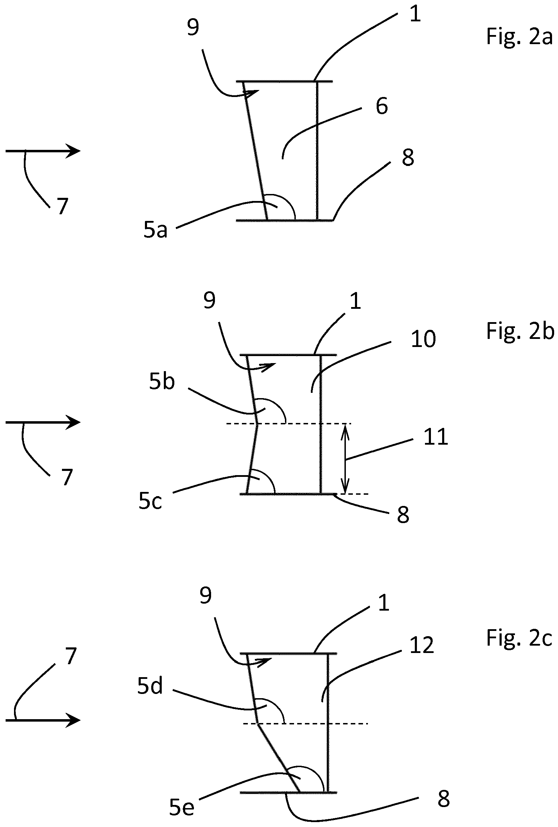

In den Figuren 2a-2c sind verschiedene Anordnungen von Stützrippen der Stützhülse 1 gezeigt, wobei jeweils nur eine Stützrippe als Draufsicht gezeigt ist.

Fig. 2a zeigt eine Stützrippe 6 als prinzipielle Darstellung, die in Strömungsrichtung 7 eines nicht gezeigten Fluidstroms einen Anströmwinkel 5a aufweist, der größer als 90° ist. Der Fluidstrom bzw. die Strömungsrichtung des Fluidstroms ist hier durch den Pfeil 7 symbolisiert, von der Stützhülse 1 selbst ist hier nur ein Ausschnitt prinzipiell dargestellt. Der Anströmwinkel 5a ist von einer imaginären Mittelachse 8 der nicht gezeichneten Strömung bis zum radialen Ende 9 der Stützrippe 6 konstant.

Durch einen Anströmwinkel 5a, der größer als 90° ist, ist die Aufprallcharakteristik der Strömung gegenüber Stützrippen mit senkrechten Stützrippen, d.h. mit Anströmwinkel 90°, verändert. Je flacher, also größer der Anströmwinkel 5a ist, desto weicher wird der Aufprall des Fluids auf die Stützrippen 6 sein.

In Fig. 2b ist eine Stützrippe 10 gezeigt, die über die radiale Ausdehnung der Rippe 10 verschiedene Anströmwinkel 5b und 5c aufweist. Am Außenrand der Rippe 10 ist der erste Anströmwinkel 5b größer als 90°, bis zu einem vorbestimmten radialen Abstand 11 von der imaginären Mittelachse 8 der nicht gezeigten Strömung ist der zweite Anströmwinkel 5c kleiner als 90°.

In Fig. 2c ist eine Stützrippe 16 gezeigt, deren Anströmwinkel 5d und 5e beide größer sind als 90°, wobei der Anströmwinkel 5e größer ist, als der Anströmwinkel 5d.

Durch diese Anordnungen ist es möglich, Unterschiede bei der Strömungsgeschwindigkeit in den Außenbereichen der Strömung gegenüber dem Strömungszentrum zu berücksichtigen.

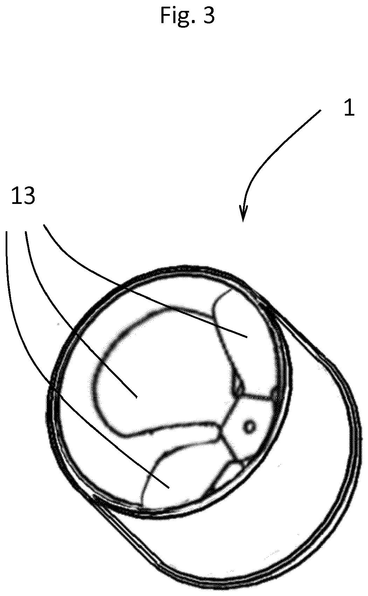

Fig. 3 zeigt eine Stützhülse 1 mit propellerartig angeordneten Stützrippen 13.

Mit dieser Anordnung ist eine Rotation der Strömung einstellbar.

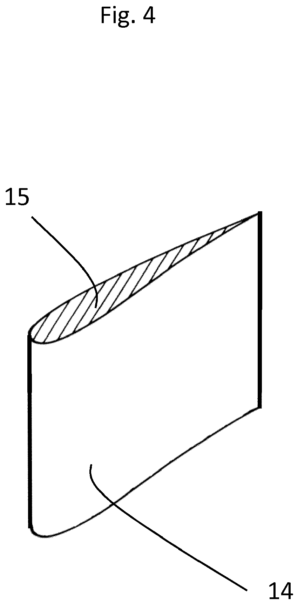

In Fig. 4 ist eine Stützrippe 14 in einem Teillängsschnitt gezeigt. Die Stützrippe 14 weist eine tragflügelähnliche Kontur 15 auf, mit der es möglich ist, die Strömungsgeschwindigkeit des strömenden Fluids an den Stützrippen 14 gezielt zu beeinflussen.

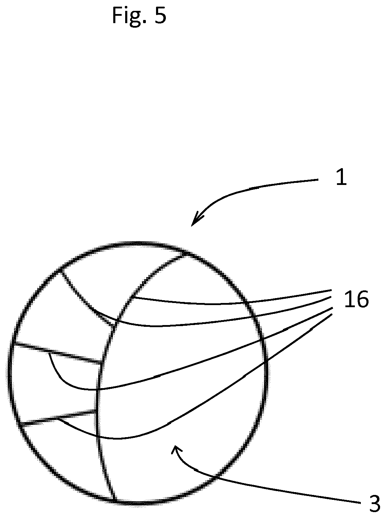

In Fig. 5 ist eine Stützhülse 1 prinzipiell im Querschnitt gezeigt, deren Stützrippen 16 über den Umfang des Strömungsquerschnitts 3 der Stützhülse 1 ungleichmäßig verteilt sind.

Dadurch sind die Strömungsverhältnisse in der Stützhülse 1 über ihren Strömungsquerschnitt 3 unterschiedlich beeinflussbar.

### Bezugszeichenliste

### (Teil der Beschreibung)

- 1: Stützhülse
- 2: Grundkörper der Stützhülse 1
- 3: Durchlassöffnung, Strömungsquerschnitt der Stützhülse 1
- 4, 6, 10, 12, 13, 14, 16: Stützrippen
- 5, 5a - 5e: Anströmwinkel
- 7: Strömung, Strömungsrichtung
- 8: imaginäre Mittelachse der Strömung 7
- 9: radiales Ende der Stützrippen
- 11: vorbestimmter radialer Abstand von der imaginären Mittelachse 8 der Strömung 7
- 15: Kontur, Querschnitt der Stützrippen 14

## Patentansprüche

1. Verbindungsanordnung für Fluidleitungen, aufweisend ein Ladeluftrohr und eine Stützhülse (1), **dadurch gekennzeichnet, dass** die Stützhülse (1) aus einem Kunststoffmaterial hergestellt ist und im Inneren (3) radial angeordnete Stützrippen (4, 6" 10, 12, 13, 14, 17) aufweist.

2. Verbindungsanordnung nach Anspruch 1, **dadurch gekennzeichnet, dass** die Stützrippen (4, 6, 10, 12, 13, 14, 16) in ihrer axialen Ausdehnung gegenüber der Strömungsrichtung (7) eines strömenden Fluids einen Anströmwinkel (5, 5a- 5e) aufweisen, der zwischen 135° und 45° liegt.

3. Verbindungsanordnung nach Anspruch 2, **dadurch gekennzeichnet, dass** der Anströmwinkel (5, 5a - 5e) über die radiale Ausdehnung der Stützrippen (4, 6, 10, 12, 13, 14, 16) verschiedene Werte aufweist.

4. Verbindungsanordnung nach Anspruch 1, 2 oder 3, **dadurch gekennzeichnet, dass** die Stützrippen (4, 6, 10, 12, 13, 14, 16) einen in Strömungsrichtung (7) sich ändernden Querschnitt (15) aufweisen.

5. Verbindungsanordnung nach mindestens einem der vorstehenden Ansprüche, **dadurch gekennzeichnet, dass** die Stützrippen (4, 6, 10, 12, 13, 14, 16) in Strömungsrichtung (7) gekrümmt sind.

6. Verbindungsanordnung nach mindestens einem der vorstehenden Ansprüche, **dadurch gekennzeichnet, dass** die Stützrippen (4, 6, 10, 12, 13, 14, 16) in Umfangsrichtung ungleichmäßig verteilt sind.
